# FASCICULE DE BREVET EUROPEEN

(11) **EP 3 276 159 B1**
(45) Date de publication et mention de la délivrance du brevet: **23.01.2019**
(21) Numéro de dépôt: 17183635.6
(22) Date de dépôt: 27.07.2017
(51) Int. Cl.: F03B 9/00, F03B 7/00, F03B 13/08, F03B 17/00

(54) **INSTALLATION POUR PRODUIRE DE L'ÉLECTRICITÉ**
STROMERZEUGUNGSANLAGE
INSTALLATION FOR GENERATING ELECTRICITY

(30) Priorité: 29.07.2016 FR 1657387
(43) Date de publication de la demande: 31.01.2018
(73) Titulaire: Cariou, Joseph, 29570 Camaret sur Mer (FR)
(72) Inventeur: CARIOU, Alain, 29160 LANVEOC (FR); CARIOU, Joseph, 45340 Nibelle (FR); CARIOU, Cédric, 93110 Rosny sous Bois (FR); CARIOU, Kévin, 93110 Rosny sous Bois (FR); CARIOU, Loïc, 93110 Rosny sous Bois (FR)
(74) Mandataire: Ipside

(56) Documents cités:
- GB-A- 172 819
- JP-A- H05 240 154
- JP-A- 2005 214 151

## Description

### DOMAINE TECHNIQUE DE L'INVENTION

La présente invention concerne une installation pour produire de l'électricité en utilisant une pression hydraulique en utilisant l'eau disponible dans des vallées et des montagnes. Elle s'applique, en particulier, au domaine de production d'électricité.

### ETAT DE LA TECHNIQUE

Les documents FR992902 et GB172819 divulguent des ensembles qui produisent électricité à partir d'une conduite forcée contenant de l'eau. L'ensemble connu du document FR992902 comporte une centrale hydroélectrique alimentée par un lac situé en hauteur de la centrale hydroélectrique. Cet ensemble comporte également un moteur actionné par une source d'énergie naturelle, par exemple le vent, qui assure la remontée de l'eau utilisée par la centrale hydroélectrique en amont de ladite centrale hydroélectrique.

Toutefois, il est noté que la puissance fournie par le moteur varie en fonction de la vitesse du vent, qui est variable et non fiable.

De même, cet ensemble réutilise de l'eau pour remplir la réserve située en hauteur pour que l'installation fonctionne et qu'il y ait un niveau constant d'eau. La réserve située en hauteur et le bassin en bas fonctionnent en alternant un mode remplissage et un mode vidage. Quand l'un se rempli l'autre se vide est inversement. Dans son fonctionnement normal, cet ensemble ne produit pas de l'électricité en continu. Cette turbine en pleine activité ne peut produire que 50% de son temps d'activité en production d'électricité. Les autres 50% de son temps où elle ne produit pas, cet ensemble consomme de l'électricité pour remonter l'eau dans le bassin amont. Cette électricité doit être produite par un système externe.

De part sa configuration, pour faire tourner la centrale hydroélectrique, il est nécessaire d'avoir un grand volume d'eau disponible.

### OBJET DE L'INVENTION

La présente invention vise à remédier à ces inconvénients.
A cet effet, la présente invention vise une installation pour produire de l'électricité en utilisant une pression hydraulique en utilisant l'eau disponible dans des vallées et des montagnes, ladite installation comprenant un système primaire hydraulique ayant des moyens réservoirs pour capter de l'eau en haute altitude, et des moyens de conduite forcée pour transporter cette eau captée à des centaines de mètres plus bas sous très haute pression ; ladite installation étant remarquable en ce qu'elle comprend :
- un système primaire comprenant un vérin hydraulique pour exploiter cette très haute pression de l'eau du circuit primaire hydraulique, le vérin hydraulique étant capable d'utiliser l'eau du circuit primaire hydraulique,
- un système secondaire d'un fluide en circuit fermé pour la mise en fonctionnement d'un élément rotatif comprenant :
   - l'élément rotatif tournant autour de pignons situés au niveau haut et bas d'un pylône,
   - une pluralité d'augets fixés à l'élément rotatif,
   - une réserve d'un fluide,
   - l'action du vérin hydraulique étant capable de récupérer le fluide de la réserve, et de pomper ce fluide tout en haut du pylône d'où il est capable de se déverser dans les augets de l'élément rotatif, ce qui entraîne un mouvement de rotation de l'élément rotatif autour des pignons,
   - un alternateur associé à un pignon de l'élément rotatif, ledit alternateur étant capable de déclencher la production d'énergie électrique par le mouvement de rotation de l'élément rotatif.

On entend par très haute pression, une pression supérieure à 100 bars.

Grâce à ces dispositions, l'installation est capable d'assurer une production électrique en continu, avec une faible consommation d'eau. La faible quantité d'eau correspond au volume du corps du vérin. Quand on emploie un volume d'eau dans le circuit primaire on met en mouvement dix volumes d'eau dans le circuit secondaire.

La puissance du circuit primaire est totalement transférée, par effet mécanique dans le circuit secondaire qui produit électricité, en déduction de la déperdition d'énergie consommée par frottement dans le déplacement des pistons et l'énergie nécessaire à l'ouverture et la fermeture de vannes.

Exemple faible consommation d'eau :
- colonne d'eau captée à 1000 m on dispose d'une haute pression disponible 100 Kg / cm2
- une source en montagne permettant un débit de 1 m3 d'eau minute.
- un seul système vérin-pompe
   - surface piston vérin de 5 cm2
   - surface piston pompe de 500 cm2
   - coefficient surface piston pompe / piston vérin de 10
- il existe un point d'équilibre à une première hauteur pour obtenir un courant mort en haut sur circuit secondaire,
- en deçà se trouve un point d'exploitation de l'élément tournant à une deuxième hauteur où l'on trouve un débit intéressant et optimisée pour faire tourner l'élément tournant,
- deuxième hauteur + poids de l'eau => énergie potentielle à exploiter.

L'élément tournant permet d'avoir un fonctionnement d'une turbine à circulation interne.

Le système secondaire est étanche, sans déperdition d'eau.

L'invention est avantageusement mise en oeuvre selon les modes de réalisation et les variantes exposées ci-après, lesquelles sont à considérer individuellement ou selon toute combinaison techniquement opérante.

Dans un mode de réalisation, le fluide est de l'eau.

L'eau est un moyen classique et connu pour produire de l'électricité. La technologie des turbines est maîtrisée. Le système est plus efficace dans la production électrique lorsque le fluide est de l'eau.

Dans un mode de réalisation, le circuit secondaire comporte au moins une pompe hydraulique liée au vérin hydraulique par des pistons solidaires.

Ainsi, l'action du vérin hydraulique entraine la pompe hydraulique. Le fait d'avoir au moins une pompe hydraulique permet dans un autre mode d'avoir deux pompes hydrauliques de chaque côté du vérin hydraulique. Ainsi, un seul vérin hydraulique actionnant par une seule action (aller retour du piston du verin) deux pompes hydraulique aspirante et refoulante. Ce qui a pour résultat une économie d'eau haute pression de 50%.

Dans un mode de réalisation, la pluralité d'augets est montée à l'endroit configuré pour qu'un déversoir remplisse les augets d'eau.

Dans un mode de réalisation, le fluide est de l'air.

L'air est plus léger, pas d'effet de masse, il est transportable à très longue distance horizontalement ou verticalement (peut être acheminé à une altitude très supérieure au point de captage de l'eau haute pression).

L'air peut mettre en fonctionnement des turbines à circuit interne hydraulique ou à air comprimé en haute pression.

Dans un mode de réalisation, le circuit secondaire comporte au moins une pompe liée au vérin hydraulique par des pistons solidaires.

Ainsi, l'action du vérin hydraulique entraine une pompe pour comprimer de l'air. Le fait d'avoir au moins une pompe permet dans un autre mode d'avoir deux pompes de chaque côté du vérin hydraulique. Ainsi, un seul vérin hydraulique actionnant par une seule action (aller retour du piston du vérin) deux pompes aspirante et refoulante. Ce qui a pour résultat une économie d'eau haute pression de 50%.

Dans un mode de réalisation, la pluralité d'augets est montée à l'envers et configurée pour qu'une buse d'admission de l'air comprimé remplisse les augets d'air.

Dans un mode de réalisation, le vérin hydraulique comporte un piston et des moyens de régulation de la vitesse de déplacement du piston.

### BREVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :
- la figure 1 représente un schéma des éléments d'un mode de réalisation particulier de l'installation pour produire de l'électricité en utilisant une pression hydraulique en utilisant l'eau disponible dans des vallées et des montagnes, objet de la présente invention,
- la figure 2 représente une vue du schéma de la figure 1 en coupe selon l'axe de coupe, noté A et représenté en figure 1,
- la figure 3 représente une variante du schéma de la figure 1 en coupe du pylône,
- la figure 4 représente l'installation pour produire de l'électricité en utilisant une pression hydraulique selon un autre mode de réalisation.

### DESCRIPTION D'EXEMPLES DE REALISATION DE L'INVENTION

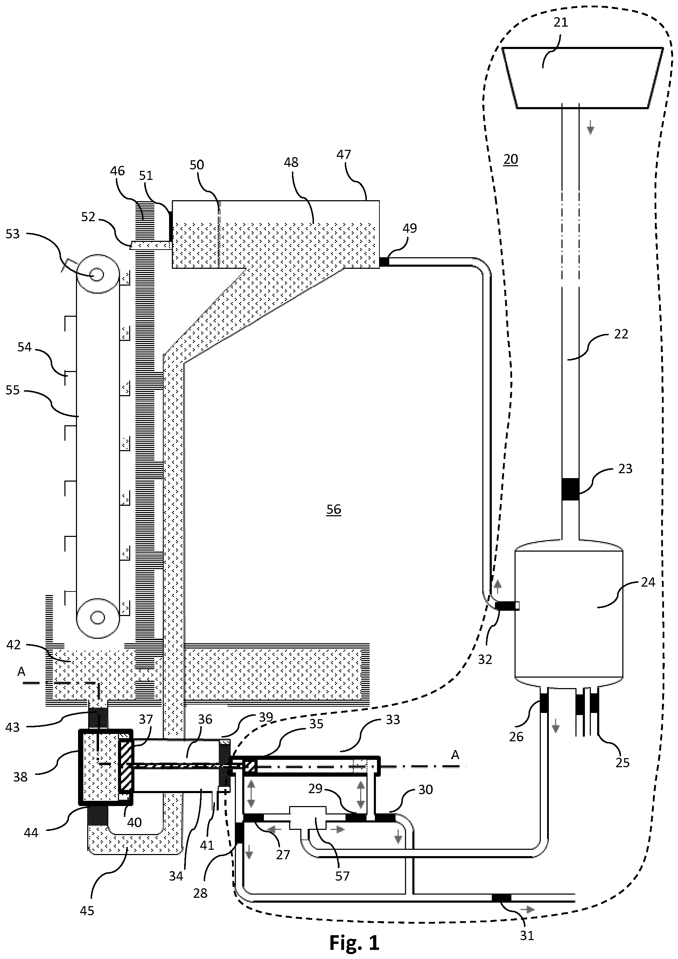

La figure 1 représente les éléments d'un mode de réalisation particulier d'une installation pour produire de l'électricité à partir d'eau sous pression en utilisant l'eau disponible dans des vallées et des montagnes.

L'installation comporte un système primaire 20 composé d'une réserve d'eau en haute altitude 21, par exemple le sommet d'une montagne. L'eau est dirigée des centaines de mètres plus bas via des moyens de conduite forcée 22, dans une cuve de distribution d'eau haute pression 24. La haute pression est appelée HP pour la suite de la description. On entend par conduite forcée, une conduite hydraulique, c'est-à-dire un assemblage de tuyaux transportant de l'eau sous pression jusqu'à l'installation située en aval et en contrebas du réservoir qui l'alimente.

L'installation comporte un système primaire 20 composé d'au moins un circuit primaire. L'installation comporte un système secondaire 56 composé d'un fluide en circuit fermé. Dans cet exemple le fluide est de l'eau.

Une vanne hydraulique HP de coupe circuit général 23 est placée au-dessus de la cuve de distribution d'eau HP 24 pour l'arrêt du système, permettant la maintenance de l'installation.

La mise hors circuit et hors eau du circuit secondaire 56 est possible afin de permettre les opérations de maintenance sur l'ensemble des composants du circuit secondaire 56.

La mise hors circuit est effective par la vanne coupe circuit générale 23 qui dans ce cas est fermée. La mise hors eau du circuit secondaire est possible par une purge, non représentée.

L'eau HP contenue dans la cuve de distribution d'eau HP 24 est injectée vers le système secondaire 56 à l'aide de la vanne HP hydraulique coupe circuit 26 du système primaire 20. La vanne HP hydraulique coupe circuit 26 est située sous la cuve de distribution d'eau HP 24.

Dans cet exemple de réalisation, il existe plusieurs points de sortie 25 supplémentaires pour l'exploitation de l'eau HP dans d'autres installations montés en parallèle.

Dans une variante, non représentée, il existe un seul point de sortie.

Lorsque la vanne HP hydraulique coupe circuit 26 est ouverte, l'eau provenant de la cuve de distribution d'eau HP 24 entre dans un réservoir de distribution d'eau HP 57. De part et d'autre du réservoir de distribution d'eau HP 57 se trouvent une vanne HP pour l'aspiration 27 et une vanne HP pour le refoulement 29.

Les mouvements d'eau HP servent à déplacer le piston 35 du vérin hydraulique du circuit primaire situé dans le corps du vérin hydraulique HP 33 du circuit primaire. A l'arrêt, le piston 35 du vérin hydraulique du circuit primaire est situé dans la partie gauche (première position) du corps du vérin hydraulique HP 33 du circuit primaire. Le piston de la pompe 37 du circuit secondaire est situé dans la partie gauche (première position) du corps de la pompe hydraulique 34 du circuit secondaire 56.

Le circuit secondaire comporte une pompe hydraulique liée au vérin hydraulique par des pistons solidaires, le piston 35 est solidaire du piston 37 par une tige du système vérin-pompe 36.

Ci-dessous la description des différents modes de fonctionnement.

### Système à l'arrêt : mise sous tension :

Lorsque le système primaire 20 est à l'arrêt, les vannes HP hydrauliques du circuit primaire suivantes sont fermées : la vanne HP pour l'aspiration 27, la vanne d'évacuation de l'eau en refoulement 28, la vanne HP pour le refoulement 29, la vanne d'évacuation de l'eau en aspiration 30 et la vanne de routage de l'eau 32.

La vanne de routage de l'eau 32 relie un conduit à la cuve de distribution d'eau HP 24 Le conduit est relié au bac 47 par le clapet anti-retour 49.

Les vannes HP hydrauliques du circuit primaire suivantes sont ouvertes : la vanne HP hydraulique coupe circuit général 23, la vanne HP hydraulique coupe circuit 26 et de la vanne d'évacuation de l'eau en continue vers la nature 31.

Lors de la mise en fonctionnement de l'installation, différentes étapes se déroulent dans les systèmes primaire 20 et secondaire 56.

Dans le système secondaire, les étapes suivantes se déroulent :
- la vanne d'injection de l'eau 44 dans le système secondaire 56 se ferme,
- la vanne d'aspiration de l'eau 43 du bac de récupération de l'eau 42 s'ouvre.

Dans le système primaire, les étapes suivantes se déroulent :
- la vanne d'évacuation de l'eau en refoulement 28 se ferme,
- la vanne HP pour le refoulement 29 se ferme,
- la vanne d'évacuation de l'eau en aspiration 30 s'ouvre,
- la vanne HP pour l'aspiration 27 s'ouvre.

### Description du mouvement d'aspiration :

Selon un mouvement d'aspiration du système primaire 20, l'eau HP contenue dans le réservoir de distribution d'eau HP 57 entre dans le circuit par la vanne HP pour l'aspiration 27. Dans une position initiale (première position), le piston se trouve à gauche du corps du vérin hydraulique HP 33 du circuit primaire. L'action de l'eau HP entrant dans le corps du vérin hydraulique HP 33 du circuit primaire permet de pousser le piston 35 du vérin hydraulique du circuit primaire vers la droite (deuxième position).

Dans une variante, non représentée, des moyens de régulation de la vitesse du déplacement du piston évitent la détérioration du piston.

Le piston 37 de la pompe du circuit secondaire se déplace également vers la droite (deuxième position) dans le corps 34 de la pompe hydraulique du circuit secondaire jusqu'aux capteurs d'inversion aspiration - refoulement 39.

Dans une variante, les capteurs d'inversion aspiration - refoulement 39 ou refoulement - aspiration 40 sont des capteurs de fin de course du piston 35 du vérin hydraulique du circuit primaire ou du piston 37 de la pompe du circuit secondaire. Les capteurs de refoulement - aspiration 40 sont situés dans le coffrage de jonction 38 entre le corps de la pompe et la canalisation d'aspiration et de refoulement.

Un volume d'eau HP remplit le corps du vérin hydraulique HP 33 du circuit primaire.

L'eau est prélevée dans le bac de récupération de l'eau 42 et passe à travers la vanne d'aspiration de l'eau du bac de récupération 43. Un volume d'eau remplit le corps de la pompe 34 hydraulique du circuit secondaire.

### Description du mouvement de refoulement :

Selon un mouvement de refoulement, différentes étapes se déroulent dans les systèmes primaires 20 et secondaire 56.

Dans le système secondaire, la vanne d'aspiration de l'eau 43 présente dans le bac de récupération 42 de l'eau se ferme.

Dans le système primaire, les étapes suivantes se déroulent :
- la vanne HP pour l'aspiration 27 se ferme
- la vanne d'évacuation de l'eau en aspiration 30 se ferme,
- la vanne d'évacuation de l'eau en refoulement 28 s'ouvre,
- la vanne HP pour le refoulement 29 s'ouvre.

Selon un mouvement de refoulement, le piston 35 du vérin hydraulique du circuit primaire se déplace vers la gauche (première position). Le piston 37 de la pompe du circuit secondaire se déplace également vers la gauche (première position) dans le corps 34 de la pompe hydraulique du circuit secondaire. Le piston 37 de la pompe du circuit secondaire se déplace jusqu'aux capteurs d'inversion refoulement - aspiration 40.

Lorsque le piston 37 de la pompe du circuit secondaire va vers la gauche dans le mouvement de refoulement, la prise d'air à pression atmosphérique 41 permet de remplir d'air le corps de la pompe hydraulique du circuit secondaire 34.

La vanne d'injection de l'eau 44 dans le circuit secondaire s'ouvre, faisant remonter l'eau dans le bac 47 via le conduit pour le refoulement de l'eau du circuit secondaire 45.

Un clapet anti-retour 49 situé en partie basse du bac 47 maintient l'eau 48 dans le bac 47. Le clapet anti-retour communique avec la vanne de routage 32.

Dans un mode de réalisation, il n'y a pas de clapet anti retour. Le clapet anti-retour permet d'assurer l'étanchéité du bac 47, même si celle-ci est assurée par la vanne 32.

Le bac 47 est équipé d'une grille anti-turbulence pour assurer un écoulement laminaire de l'eau dans le déversoir 52.

La vanne de routage de l'eau évacuée vers le pylône 32 sert à faire un appoint d'eau dans le bac 47 pour charger le système secondaire en fluide.

### Description du fonctionnement de l'installation :

L'eau 48 contenue dans le bac 47 est déversée dans des augets 54. Dans ce cas les augets 54 sont montés à l'endroit, l'ouverture est orientée vers un déversoir 52 situé en haut de pylône 46. Le déversoir 52 assure l'alimentation des augets 54 en eau. Le débit d'eau du déversoir pour l'alimentation des augets est modulé par des vannes 51 pour l'alimentation des augets 54. Les augets 54 sont fixés sur un élément rotatif 55 tel qu'une courroie, qui entraine des pignons 53. Le remplissage des augets 54 en eau entraine le déplacement de la courroie par effet de la gravité. Les pignons 53 sont reliés à un alternateur, non représenté, qui produit de l'électricité.

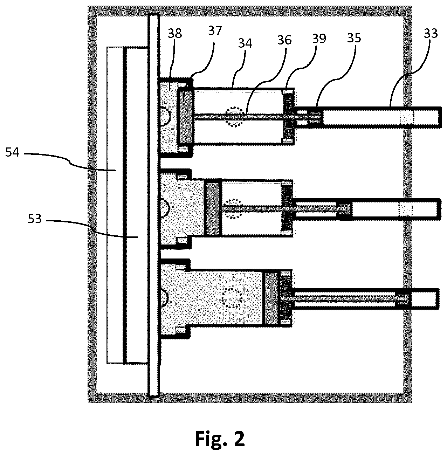

La figure 2 représente une vue en coupe selon l'axe noté A sur la figure 1. Il est représenté la courroie présentant des augets 54 et fixée aux pignons 53. Les cercles en pointillés représentent plusieurs installations montées en parallèle.

La figure 2 montre une configuration où les mouvements d'aspiration et de refoulement sont assurés par un montage de trois installations montées en parallèle montrant trois état de remplissage différents (en décalé). Les références sont notées sur une seule installation montrée par les pointillés. Dans le bac de récupération de l'eau 42 sont représentés trois coffrages de jonction 38, trois corps de la pompe hydraulique du circuit secondaire 34 et trois corps du vérin hydraulique HP du circuit primaire 33. Dans le coffrage de jonction 38 sont placés les capteurs d'inversion refoulement-aspiration 40. Le corps de la pompe hydraulique du circuit secondaire 34 comprend le piston de la pompe du circuit secondaire 37 et des capteurs d'inversion aspiration-refoulement 39. Le piston de la pompe du circuit secondaire 37 est relié par une tige du système vérin-pompe 36 au piston du vérin hydraulique du circuit primaire 35, lui-même contenu dans le corps du vérin hydraulique 33 HP du circuit primaire.

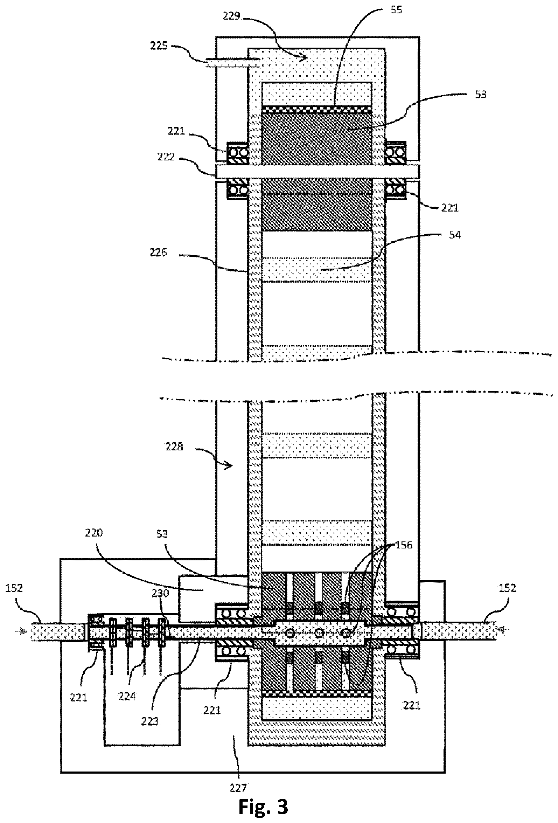

La figure 3 représente une variante du schéma de la figure 1 en coupe du pylône. On retrouve certains éléments mentionné à la figure 1.

Sur cette figure, il est montré un support 220 métallique de l'axe du pignon 223 bas. Un socle 227 supporte l'ensemble du système secondaire. L'axe du pignon bas223 est maintenu par deux roulements à billes 221.

Un coffrage étanche 226 est représenté au tour de l'élément rotatif 55. Au niveau du pignon haut, il y a une prise d'air 225. L'axe du pignon haut222 est maintenu par deux roulements à billes 221.

Il est également représenté des connecteurs électrique 224 et une alimentation électrique 230 pour commander l'ouverture et la fermeture des vannes de distribution de l'air comprimé dans les augets 54.

Un autre roulement à bille 221 maintient l'extrémité de l'axe du pignon bas 223.

La flèche 228 représente une partie de l'élément rotatif 55 immergée dans l'eau et la flèche 229 représente un espace d'air à pression atmosphérique.

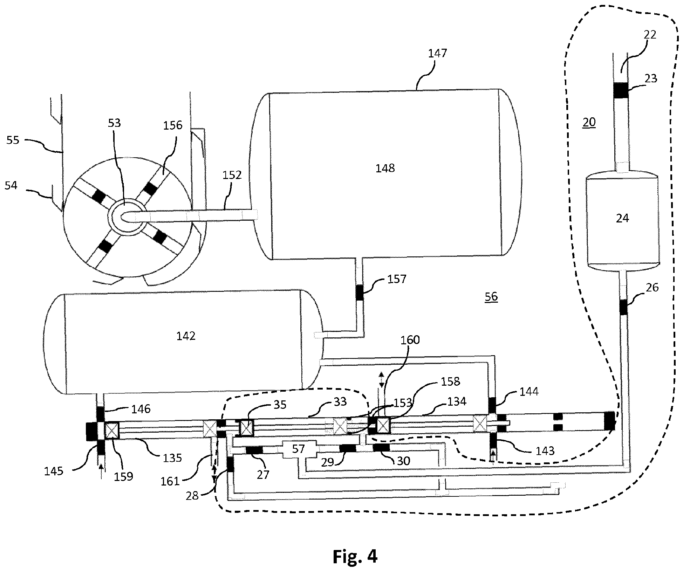

La figure 4 reprend certains éléments de la figure 1.

La figure 4 représente selon un autre mode de réalisation particulier une installation pour produire de l'électricité à partir d'eau sous pression en utilisant l'eau disponible dans des vallées et des montagnes.

L'installation comporte un système primaire 20 composé d'une réserve d'eau en haute altitude non représentée, par exemple le sommet d'une montagne. L'eau est dirigée des centaines de mètres plus bas via des moyens de conduite forcée 22, dans une cuve de distribution d'eau haute pression 24. L'installation comporte un système primaire 20 composé d'au moins un circuit primaire. L'installation comporte un système secondaire 56 composé d'un fluide en circuit fermé. Dans cet exemple le fluide est de l'air.

Une vanne hydraulique HP de coupe circuit général 23 est placée au-dessus de la cuve de distribution d'eau HP 24 pour l'arrêt du système, permettant la maintenance de l'installation. L'eau HP contenue dans la cuve de distribution d'eau HP 24 est injectée vers le système secondaire 56 à l'aide de la vanne HP hydraulique coupe circuit 26 du système primaire 20. La vanne HP hydraulique coupe circuit 26 est situé sous la cuve de distribution d'eau HP 24.

Dans une variante, non représentée, il existe plusieurs points de sortie.

Lorsque la vanne HP hydraulique coupe circuit 26 est ouverte, l'eau provenant de la cuve de distribution d'eau HP 24 entre dans un réservoir de distribution d'eau HP 57.

De part et d'autre du réservoir de distribution d'eau HP 57 se trouvent une vanne HP pour l'aspiration 27 et une vanne HP pour le refoulement 29.

Les mouvements d'eau (aspiration ou refoulement) HP servent à déplacer le piston 35 du vérin hydraulique du circuit primaire situé dans le corps du vérin hydraulique HP 33 du circuit primaire. A l'arrêt, le piston 35 du vérin hydraulique du circuit primaire est situé dans la partie gauche (première position) du corps du vérin hydraulique HP 33 du circuit primaire.

Dans cet exemple de réalisation, l'installation fonctionne selon deux configurations :
- pour l'aspiration, on passe de gauche à droite (première position à la deuxième position)
- pour le refoulement, on passe de droite à gauche (deuxième position à la première position)

Ci-dessous la description des différents modes de fonctionnement.

### Système à l'arrêt : mise sous tension :

Lorsque le système primaire 20 est à l'arrêt, les vannes HP hydrauliques du circuit primaire suivantes sont fermées : la vanne HP pour l'aspiration 27, la vanne d'évacuation de l'eau en refoulement 28, la vanne HP pour le refoulement 29, la vanne d'évacuation de l'eau 30, la vanne d'aspiration de l'air pour le refoulement 143, la vanne d'injection de l'air dans le circuit secondaire 144 et la vanne d'aspiration de l'air pour l'aspiration 145.

Les vannes HP hydrauliques du circuit primaire suivantes sont ouvertes : la vanne HP hydraulique coupe circuit général 23 et la vanne HP hydraulique coupe circuit 26.

### Description du mouvement d'aspiration :

Différentes étapes se déroulent dans les systèmes primaire 20 et secondaire 56.

Dans le système secondaire, les étapes suivantes se déroulent :
- la vanne d'injection de l'air dans le circuit secondaire 146 se ferme,
- la vanne d'aspiration de l'air pour l'aspiration 145 s'ouvre,
- la vanne d'aspiration de l'air pour le refoulement 143 se ferme,
- la vanne d'injection de l'air dans le circuit secondaire 144 s'ouvre. Dans le système primaire, les étapes suivantes se déroulent :
- la vanne d'évacuation de l'eau en refoulement 28 se ferme,
- la vanne HP pour le refoulement 29 se ferme
- la vanne d'évacuation de l'eau 30 s'ouvre,
- la vanne HP pour l'aspiration 27 s'ouvre.

Selon un mouvement d'aspiration du système primaire 20, l'eau HP contenue dans le réservoir de distribution d'eau HP 57 entre dans le circuit par la vanne HP pour l'aspiration 27. Dans une position initiale, le piston se trouve à gauche du corps du vérin hydraulique HP 33 (première position) du circuit primaire. L'action de l'eau HP permet de pousser le piston 35 du vérin hydraulique du circuit primaire vers la droite (deuxième position).

Le déplacement du piston 35 du vérin hydraulique du circuit primaire de la gauche (première position) vers la droite (deuxième position) entraine une compression de l'air présent dans le corps de pompe d'aspiration 134.

Le circuit secondaire comporte une pompe liée au vérin hydraulique par des pistons solidaires. Le piston d'aspiration 158 est lié au piston 35. Lorsque le piston 35 passe de la gauche vers la droite (première à la deuxième position) il entraine le mouvement rectiligne du piston d'aspiration 158.

Dans une variante, un système de capteur 153 limite l'amplitude du déplacement du piston et évite la détérioration du piston.

Dans le système secondaire, la vanne d'aspiration de l'air pour le refoulement 143 se ferme. La vanne d'injection de l'air dans le circuit secondaire 144 s'ouvre. L'air comprimé est alors envoyé dans le bac de récupération de l'air comprimé 142.

Lorsque le piston 35 va vers la droite dans le mouvement d'aspiration, l'aspiration-refoulement d'air de la pompe d'aspiration 160 permet de remplir le corps de la pompe d'aspiration 134. L'aspiration-refoulement d'air de la pompe de refoulement 161 permet de chasser l'air du corps de la pompe de refoulement 135.

### Description du mouvement de refoulement :

Différentes étapes se déroulent dans les systèmes primaires 20 et secondaire 56.

Dans le système secondaire, les étapes suivantes se déroulent :
- la vanne d'aspiration de l'air pour l'aspiration 145 se ferme,
- la vanne d'injection de l'air dans le circuit secondaire 146 s'ouvre,
- la vanne d'injection de l'air dans le circuit secondaire 144 se ferme.
- la vanne d'aspiration de l'air pour le refoulement 143 s'ouvre,

Dans le système primaire, les étapes suivantes se déroulent :
- la vanne d'évacuation de l'eau 30 se ferme,
- la vanne HP pour l'aspiration 27 se ferme
- la vanne d'évacuation de l'eau en refoulement 28 s'ouvre,
- la vanne HP pour le refoulement 29 s'ouvre.

Selon un mouvement de refoulement, le piston 35 du vérin hydraulique du circuit primaire se déplace vers la première position. L'eau contenue dans le corps du vérin hydraulique HP 33 du circuit primaire est évacuée par les vannes d'évacuation de l'eau 28.

Le déplacement du piston 35 du vérin hydraulique du circuit primaire de la droite (deuxième position) vers la gauche (première position) entraine une compression de l'air présent dans le corps de pompe 135.

Le circuit secondaire comporte une pompe liée au vérin hydraulique par des pistons solidaires. Le piston de refoulement 159 est lié au piston 35. Lorsque le piston 35 passe de la droite vers la gauche (deuxième à la première position) il entraine le mouvement rectiligne du piston de refoulement 159.

Lorsque le piston 35 va vers la gauche dans le mouvement de refoulement, l'aspiration-refoulement d'air de la pompe de refoulement 161 permet de remplir le corps de la pompe de refoulement 135. L'aspiration-refoulement d'air de la pompe d'aspiration 160 permet de chasser l'air du corps de la pompe d'aspiration 134.

L'air comprimé contenu dans le bac de récupération de l'air 142 est envoyé dans le bac de la réserve grâce à un détendeur d'air comprimé 157.

L'air contenu dans le bac de la réserve 147 est envoyé dans des augets 54. Une buse d'admission de l'air comprimé 152 assure l'alimentation des augets 54 en air comprimé. Des vannes de distribution de l'air comprimé 156 envoient l'air sous les augets 54. Le débit d'air issue de la buse d'admission de l'air comprimé 152 assure la vitesse de remplissage des augets en fonction de leur volume. Dans ce cas, les augets 54 sont montés à l'envers au niveau des vannes de distribution de l'air comprimé 156.

Les augets 54 sont fixés sur une courroie qui entraine des pignons 53. Dans cet exemple de réalisation, les augets sont montés à l'inverse de la figure 1. Le remplissage des augets 54 en air entraine le déplacement de la courroie. Les pignons 53 sont reliés à un alternateur (non représenté sur la figure 1), qui produit de l'électricité.

### NOMENCLATURE

20. système primaire
21. réserve d'eau en altitude
22. conduite forcée d'eau HP (Haute Pression)
23. vanne HP hydraulique coupe circuit général
24. cuve de distribution d'eau HP
25. points de sortie
26. vanne HP hydraulique coupe circuit
27. vanne HP pour l'aspiration
28. vanne d'évacuation de l'eau en refoulement
29. vanne HP pour le refoulement
30. vanne d'évacuation de l'eau en aspiration
31. vanne d'évacuation de l'eau en continue vers la nature
32. vanne de routage de l'eau
33. corps du vérin hydraulique HP du circuit primaire
34. corps de la pompe hydraulique du circuit secondaire
35. piston du vérin hydraulique du circuit primaire
36. tige du système vérin-pompe
37. piston de la pompe du circuit secondaire
38. coffrage de jonction entre le corps de la pompe et canalisation d'aspiration et de refoulement
39. capteur d'inversion aspiration - refoulement
40. capteur d'inversion refoulement - aspiration
41. prise d'air à pression atmosphérique
42. bac de récupération de l'eau
43. vanne d'aspiration de l'eau du bac de récupération
44. vanne d'injection de l'eau dans le circuit secondaire
45. conduit pour le refoulement de l'eau du circuit secondaire
46. pylône
47. bac
48. eau
49. clapet anti-retour
50. grille anti-turbulence
51. vannes pour alimentation des augets en eau
52. déversoir pour l'alimentation des augets en eau
53. pignon entrainé par la courroie qui porte les augets
54. augets
55. élément rotatif
56 système secondaire
57. réservoir de distribution d'eau HP
134. corps de la pompe d'aspiration
135. corps de la pompe de refoulement
142. bac de récupération de l'air comprimé
143. vanne d'aspiration de l'air pour le refoulement
144. vanne d'injection de l'air dans le circuit secondaire
145. vanne d'aspiration de l'air pour l'aspiration
146. vanne d'injection de l'air dans le circuit secondaire
147. bac de la réserve
152. buse d'admission de l'air comprimé
153. capteur
156. vannes de distribution de l'air comprimé
157. détendeur à air comprimé
158. piston de la pompe d'aspiration
159. piston de la pompe de refoulement
160. aspiration-refoulement d'air de la pompe d'aspiration
161. aspiration-refoulement d'air de la pompe de refoulement
220. support métallique de l'axe du pignon
221. roulements à bille
222. axe pignon haut
223. axe pignon bas
224. connecteurs électrique
225. prise d'air
226. coffrage étanche de l'élément rotatif
227. socle de l'élément rotatif
228. partie de la turbine immergée dans l'eau
229. espace d'air à pression atmosphérique
230. alimentation électrique pour commande d'ouverture et de fermeture des vannes de distribution de l'air comprimé dans les augets

## Revendications

1. Installation pour produire de l'électricité en utilisant une pression hydraulique en utilisant l'eau disponible dans des vallées et des montagnes, ladite installation comprenant un système primaire (20) hydraulique ayant des moyens réservoirs (21) pour capter de l'eau en haute altitude, et des moyens de conduite forcée (22) pour transporter cette eau captée à des centaines de mètres plus bas sous très haute pression ; ladite installation étant **caractérisée en ce que** :
- ledit système primaire (20) comprend un vérin hydraulique (33) pour exploiter cette très haute pression de l'eau du circuit primaire hydraulique le vérin hydraulique (33) étant capable d'utiliser l'eau du circuit primaire hydraulique,
- ladite installation étant aussi **caractérisée en ce qu'**elle comprend :
- un système secondaire (56) d'un fluide en circuit fermé pour la mise en fonctionnement d'un élément rotatif (55) comprenant :
• l'élément rotatif (55) tournant autour de pignons (53) situés au niveau haut et bas d'un pylône (46),
• une pluralité d'augets (54) fixés à l'élément rotatif (55),
• une réserve (47) d'un fluide,
• l'action du vérin hydraulique (33) étant capable de récupérer le fluide de la réserve, et de pomper (45) ce fluide tout en haut du pylône (46) d'où il est capable de se déverser dans les augets (54) de l'élément rotatif (55), ce qui entraîne un mouvement de rotation de l'élément rotatif (55) autour des pignons (53),
• un alternateur associé à un pignon (53) de l'élément rotatif (55), ledit alternateur étant capable de déclencher la production d'énergie électrique par le mouvement de rotation de l'élément rotatif (55).

2. Installation selon la revendication 1, dans lequel le fluide est de l'eau.

3. Installation selon la revendication 2, dans lequel le circuit secondaire comporte au moins une pompe hydraulique (34) liée au vérin hydraulique (33) par des pistons solidaires (35, 37).

4. Installation selon la revendication 1, dans lequel la pluralité d'augets (54) est montée à l'endroit configuré pour qu'un déversoir (52) remplisse les augets (54) d'eau.

5. Installation selon la revendication 1, dans lequel le fluide est de l'air.

6. Installation selon la revendication 5, dans lequel le circuit secondaire comporte au moins une pompe (134, 135) liée au vérin hydraulique (33) par des pistons solidaires (35, 158, 159).

7. Installation selon la revendication 5, dans lequel la pluralité d'augets (54) est montée à l'envers configuré pour qu'une buse d'admission de l'air comprimé (152) remplisse les augets (54) d'air.

8. Installation selon la revendication 1, dans lequel le vérin hydraulique (33) comporte un piston (35) et des moyens de régulation de la vitesse de déplacement du piston (35).

## Patentansprüche

1. Anlage, um Elektrizität unter Verwendung eines hydraulischen Drucks unter Verwendung des Wassers zu erzeugen, das in Tälern und Gebirgen verfügbar ist, wobei die Anlage ein hydraulisches Primärsystem (20) umfasst, das Speichermittel (21) aufweist, um Wasser in großer Höhe aufzufangen, und Druckleitungsmittel (22), um dieses aufgefangene Wasser unter sehr hohem Druck hunderte Meter tiefer zu transportieren; wobei die Anlage **dadurch gekennzeichnet ist, dass**:
- das Primärsystem (20) einen hydraulischen Zylinder (33) umfasst, um diesen sehr hohen Druck des Wassers des hydraulischen Primärkreises auszunutzen, wobei der hydraulische Zylinder (33) das Wasser des hydraulischen Primärkreises verwenden kann,
- wobei die Anlage ebenfalls **dadurch gekennzeichnet ist, dass** sie umfasst:
- ein Sekundärsystem (56) eines Fluids in geschlossenem Kreis für die Inbetriebsetzung eines drehenden Elements (55), umfassend:
- das drehende Element (55), das um Zahnräder (53) herum läuft, die auf der oberen und unteren Ebene eines Masts (46) liegen,
- eine Vielzahl von Kellen (54), die an dem drehenden Element (55) befestigt sind,
- eine Reserve (47) eines Fluids,
- wobei die Arbeit des hydraulischen Zylinders (33) das Fluid der Reserve zurückholen und dieses Fluid ganz nach oben am Mast (46) pumpen (45) kann, von wo es sich in die Kellen (54) des drehenden Elements (55) ergießen kann, was eine Drehbewegung des drehenden Elements (55) um die Zahnräder (53) herum bewirkt,
- einen Wechselstromerzeuger, der mit einem Zahnrad (53) des drehenden Elements (55) verknüpft ist, wobei der Wechselstromerzeuger die Erzeugung von elektrischer Energie durch die Drehbewegung des drehenden Elements (55) auslösen kann.

2. Anlage nach Anspruch 1, wobei das Fluid Wasser ist.

3. Anlage nach Anspruch 2, wobei der Sekundärkreis mindestens eine hydraulische Pumpe (34) umfasst, die über fest verbundene Kolben (35, 37) mit dem hydraulischen Zylinder (33) verbunden ist.

4. Anlage nach Anspruch 1, wobei die Vielzahl von Kellen (54) richtig herum montiert sind, derart, dass ein Auslass (52) die Kellen (54) mit Wasser füllt.

5. Anlage nach Anspruch 1, wobei das Fluid Luft ist.

6. Anlage nach Anspruch 5, wobei der Sekundärkreis mindestens eine Pumpe (134, 135) umfasst, die über fest verbundene Kolben (35, 158, 159) mit dem hydraulischen Zylinder (33) verbunden ist.

7. Anlage nach Anspruch 5, wobei die Vielzahl von Kellen (54) verkehrt herum montiert sind, derart, dass eine Düse zum Einlassen der Druckluft (152) die Kellen (54) mit Luft füllt.

8. Anlage nach Anspruch 1, wobei der hydraulische Zylinder (33) einen Kolben (35) und Mittel zum Regeln der Bewegungsgeschwindigkeit des Kolbens (35) umfasst.

## Claims

1. Installation for generating electricity using a hydraulic pressure using the water available in valleys and mountains, said installation comprising a primary hydraulic system (20) having reservoir means (21) to capture water at high altitude, and penstock means (22) to transport this captured water several hundred metres lower at very high pressure; said installation being **characterised in that**:
- said primary system (20) comprises a hydraulic ram (33) for exploiting this very high pressure of the water of the primary hydraulic circuit, the hydraulic ram (33) being capable of using the water of the primary hydraulic circuit,
- said installation also being **characterised in that** it comprises:
- a secondary system (56) of a fluid in closed circuit to start operation of a rotating element (55) comprising:
- the rotating element (55) rotating about sprocket wheels (53) located at the top and bottom levels of a post (46),
- a plurality of buckets (54) fixed to the rotating element (55),
- a reserve (47) of a fluid,
- the action of the hydraulic ram (33) being capable of recovering the fluid of the reserve and pumping (45) this fluid to the top of the post (46), wherefrom it can flow into the buckets (54) of the rotating element (55), thereby causing a rotation movement of the rotating element (55) about the sprocket wheels (53),
- an alternator associated with a sprocket wheel (53) of the rotating element (55), said alternator being capable of triggering the production of electrical energy by the rotation movement of the rotating element (55).

2. Installation according to claim 1, wherein the fluid is water.

3. Installation according to claim 2, wherein the secondary circuit has at least one hydraulic pump (34) connected to the hydraulic ram (33) by integral pistons (35, 37).

4. Installation according to claim 1, wherein the plurality of buckets (54) is installed right side up so that a spout (52) fills the buckets (54) with water.

5. Installation according to claim 1, wherein the fluid is air.

6. Installation according to claim 5, wherein the secondary circuit has at least one pump (134, 135) connected to the hydraulic ram (33) by integral pistons (35, 158, 159).

7. Installation according to claim 5, wherein the plurality of buckets (54) is installed upside down so that an inlet nozzle of the compressed air (152) fills the buckets (54) with air.

8. Installation according to claim 1, wherein the hydraulic ram (33) has a piston (35) and means of controlling the displacement speed of the piston (35).
